# EUROPÄISCHE PATENTSCHRIFT

(11) **EP 2 875 734 B1**
(45) Veröffentlichungstag und Bekanntmachung des Hinweises auf die Patenterteilung: **25.07.2018**
(21) Anmeldenummer: 14193604.7
(22) Anmeldetag: 18.11.2014
(51) Int. Cl.: A23G 9/06, A23G 9/24, A23G 9/48

(54) **Vorrichtung und Verfahren zur Herstellung von Speiseeis**
Device and method for producing ice cream
Procédé et dispositif destinés à la fabrication de crème glacée

(30) Priorität: 21.11.2013 DE 102013019500
(43) Veröffentlichungstag der Anmeldung: 27.05.2015
(73) Patentinhaber: Messer Slovenija d.o.o., 2342 Ruse (SI)
(72) Erfinder: Sibila, Dejan, 2342 Ruse (SI)
(74) Vertreter: Münzel, Joachim R.

(56) Entgegenhaltungen:
- EP-A1- 0 960 575
- EP-A1- 1 302 112
- EP-A1- 1 767 099
- EP-A2- 0 857 425
- EP-A2- 0 919 133
- EP-B1- 0 971 598
- DE-A1- 19 548 104
- DE-U1- 29 724 064
- FR-A1- 2 766 738
- GB-A- 1 482 484
- JP-A- H07 115 911
- JP-A- H07 163 301
- JP-A- H08 126 476
- US-A- 5 813 237
- YU BAONING: "Application of liquid nitrogen freezing technology in production of ice cream", SHIPIN YU JIXIE - FOOD AND MACHINERY, GAI KAN BIANJIBU, CHANGSHA, CN, Nr. 3, 1. Januar 2002 (2002-01-01), Seiten 25-26, XP008175592, ISSN: 1003-5788
- MAGGI ET AL: "Azoto e Ice Cream. [Nitrogen and ice cream]", IL LATTE, TECNICHE NUOVE, MILAN, IT, Bd. 23, Nr. 7, 1. Juli 1998 (1998-07-01), Seiten 41-43, XP008175590, ISSN: 0392-6060

## Beschreibung

Die Erfindung betrifft eine Vorrichtung zum Herstellen von Speiseeisprodukten, mit einem mit einer flüssigen Überzugmasse füllbarem Tauchbad, einer Einrichtung zum Einbringen eines gefrorenen Kerns aus Speiseeis in das Tauchbad zur Herstellung eines aus dem mit einem Überzug aus Überzugsmasse versehenen Kern bestehenden Eisprodukts, und einer Einrichtung zum Kühlen der Oberfläche des Eisprodukts. Die Erfindung betrifft des Weiteren ein entsprechendes Verfahren.

Um Speiseeisprodukte in Form von Stieleis (bzw. "Eis am Stiel") mit einem Überzug aus beispielsweise Schokolade oder Fruchtsoße zu versehen, wird das am Stiel oder an einer Waffel befindliche Speiseeis für eine kurze Zeit in ein Tauchbad mit einer flüssigen Überzugsmasse eingetaucht. Anschließend wird das mit dem Überzug versehene Eisprodukt gekühlt, wobei die Überzugsmasse so weit aushärtet, dass das Eisprodukt verpackt werden kann. Ein Beispiel dieser Art ist etwa aus der EP 500 940 A1 bekannt. Um den Produktionsablauf zu beschleunigen, wird in der EP 2 223 607 A1 vorgeschlagen, das mit der Überzugsmasse gefüllte Tauchbecken derart zu dimensionieren, dass mehrere Eisprodukte gleichzeitig eingetaucht werden können. Gleichwohl haben die bekannten Verfahren den Nachteil, dass während des Transports der Eisprodukte zur Verpackungseinrichtung Teile der noch nicht vollständig ausgehärteten Überzugsmasse vom Eisprodukt abtropfen können. Die Folge sind häufige Betriebspausen zur Reinigung der Anlage.

Um die Verfestigung des Überzugs zu beschleunigen, wird in der EP 0 971 598 B1 vorgeschlagen, das mit einem Überzug versehenes Stieleis für eine Zeitdauer von 7s bis 25s in ein aus flüssigem Stickstoff bestehendes Bad einzutauchen. Nach diesem Kühlvorgang kann das Stieleis entweder als fertiges Produkt verpackt oder in einem nächsten Verfahrensschritt mit einem oder mehreren weiteren Überzügen versehen werden. Mit einem derartigen Verfahren ist es möglich, die Aushärtung deutlich zu beschleunigen und somit dem Abtropfen von Überzugsmasse entgegen zu wirken; andererseits es ist jedoch mit einem erheblichen apparativen Aufwand und einem hohen Verbrauch an flüssigem Stickstoff verknüpft.

Vorrichtungen zum Herstellen von Speiseeisprodukten mit einer Einrichtung zum Einbringen eines gefrorenen Kerns aus Speiseeis in ein Tauchbad aus flüssiger Überzugsmasse und einer Kühleinrichtung, bei der das Eisprodukt zum Kühlen und Aushärten der Oberfläche des Überzugs in ein Bad aus flüssigem Stickstoff eingetaucht wird, sind auch aus den Dokumenten EP 0 971 598 B1, JP H07 163301 A, JP H08 126476 A, DE 29724 064 U1, EP 1 767 099 A1 und EP 0 919 133 A2 bekannt. Einrichtungen, bei denen Eisprodukte zwecks Kühlung und Aushärtung mit flüssigem Stickstoff besprüht oder durch eine flüssigen Stickstoff enthaltende Atmosphäre geführt werden, sind aus der JP H07 115911 A, der EP 0 857 425 A2, US 5 813 237 A, der EP 0 960 574 A1, der DE 195 48 104 A1 und der FR 2 766 738 A1 bekannt.

Aus dem Fachaufsatz von YU BAONING, "Application of liquid nitrogen freezing technology in production of ice cream", SHIPIN YU JIXIE - FOOD AND MACHINERY, GAI KAN BIANJIBU, CHANGSHA, CN, Nr. 3, 01. Januar 2002, Seiten 25-26, XP008175592, der EP 1 302 112 A1, der GB 1 482 484 A sowie dem Fachaufsatzvon MAGGI ET AL, "Azoto e Ice Cream. [Nitrogen and ice cream]", IL LATTE, TECNICHE NUOVE, MAILAND, IT, (19980701), Bd. 23, Nr. 7, Seiten 41 - 43, XP008175590 sind Verfahren und Vorrichtungen bekannt, bei denen zur Herstellung von Speiseeisprodukten jeweils ein gefrorener Kern aus Speiseeis in ein Tauchbad aus flüssiger Überzugsmasse eingebracht wird. Die Oberfläche der Überzugsmasse wird anschließend gekühlt und ausgehärtet, indem die mit dem Überzug versehenen mit flüssigem Stickstoff besprüht werden. Auf ein Tauchbad aus flüssigem Stickstoff zum Aushärten des Überzuges wird bei diesen Gegenständen verzichtet, wodurch insbesondere der Stickstoffverbrauch reduziert werden kann. Freilich sind auch diese Anordnungen hinsichtlich der Prozessgeschwindigkeit und des Stickstoffverbrauchs noch verbesserungsfähig.

Der Erfindung liegt daher die Aufgabe zu Grunde, ein Verfahren und eine Vorrichtung zur Herstellung von Speiseeisprodukten, insbesondere von Stieleis anzugeben, das sich durch eine rasche Aushärtung der Überzugsmasse auszeichnet und darüber hinaus eine höhere Wirtschaftlichkeit als bekannte Verfahren besitzt.

Gelöst ist diese Aufgabe durch eine Vorrichtung mit den Merkmalen des Anspruchs 1 und ein Verfahren mit den Merkmalen des Anspruchs 5. Vorteilhafte Ausführungsformen der Erfindung werden in den Unteransprüchen beansprucht.

Gemäß der Erfindung werden die üblicherweise mit einem Förderband transportierten Speiseeisprodukte (Im Folgenden nur "Eisprodukte" genannt) nacheinander einer innerhalb der Kühleinrichtung angeordneten Düsenanordnung zugeführt, mittels der sie über eine Zeitdauer von beispielsweise zwischen 3s und 10s mit einem kryogenen Kühlmedium besprüht werden. Das auf die Oberfläche des Eisprodukts auftreffende Kühlmedium nimmt dabei Wärme aus dem Oberflächenbereich des Eisprodukts auf und wird anschließend abgeführt. Auf diese Weise wird zumindest die Oberfläche des Überzugs rasch abgekühlt und soweit ausgehärtet, dass eine anschließende Verpackung ohne lange weitere Auskühlzeiten möglich ist. Dadurch, dass das kryogene Kühlmedium direkt aus der Düsenanordnung auf die Oberfläche des Eisprodukts aufgesprüht wird, wird die Kälte des kryogenen Mediums zielgerichtet zur Kühlung des Eisprodukts eingesetzt. Es muss kein Stickstoffbad vorgehalten werden. Darüberhinaus kann die Menge des den Düsen zugeführten Kühlmediums sehr genau dosiert und den jeweiligen Erfordernissen angepasst werden. Die Düsenanordnung kann im Übrigen auch so dimensioniert sein, dass mehrere Eisprodukte gleichzeitig mit kryogenem Kühlmedium beaufschlagt werden. Die Erfindung ist zur Kühlung von fetthaltigen Überzügen, wie beispielsweise Schokoladenüberzüge ebenso geeignet wie zur Kühlung von fettarmen Überzügen, wie beispielsweise Überzüge aus Fruchtmischungen oder Wassereis.

Bevorzugt ist die Düsenanordnung in einem Kühltunnel angeordnet, den die zu kühlenden Eisprodukte mit Hilfe der Transporteinrichtung durchlaufen. Dadurch werden negative Einflüsse der Umgebungsatmosphäre auf den Kühlvorgang weitgehend ausgeschlossen und der Kälteinhalt des eingesetzten Kühlmediums besonders gut genutzt. Der Kühltunnel ist vorzugsweise mit thermisch isolierten Wänden ausgerüstet, um Wärmeverluste zu minimieren.

Die Erfindung sieht vor, dass die Düsenanordnung wenigstens zwei Düsenaustritte, beispielsweise in Gestalt von Sprühdüsen umfasst, die auf einander gegenüberliegenden Seiten eines beim bestimmungsgemäßen Einsatz der Vorrichtung von den Eisprodukten in der Kühlleinrichtung bzw. im Kühltunnel durchlaufenen Transportweges angeordnet sind. Bei dieser Ausgestaltung der Erfindung wird das Eisprodukt beim Kühlvorgang also gleichzeitig von beiden Seiten mit Kühlmedium beaufschlagt und so besonders rasch gekühlt.

Bevorzugt weist die Kühleinrichtung eine mit einer Absaugeinrichtung für gasförmiges kryogenes Kühlmedium ausgerüstete Gasentnahmeleitung auf. Auf diese Weise wird vermieden, dass anfallendes Abgas, beispielsweise verdampfter Stickstoff oder Kohlendioxid, in die Umgebung der Kühleinrichtung entweicht. Das aufgefangene Abgas kann abgeführt oder aber einer weiteren Verarbeitung zugeführt werden. Da es noch eine erhebliche Restkälte besitzt, ist es insbesondere vorteilhaft, es zur Kühlung in weiteren Prozessen der Speiseeiszubereitung einzusetzen.

Um die Menge an zugeführtem kryogenen Kühlmedium möglichst genau den jeweiligen Anforderungen anpassen zu können ist es vorteilhaft, dass die Düsenanordnung mit einer Steuereinrichtung in Wirkverbindung steht, mittels der die Menge des auf die Eisprodukte ausgetragenen Kühlmediums nach vorgegebenen oder laufend gemessenen Parametern einstellbar und/oder regelbar ist. Insbesondere ist es so möglich, die Menge an Kühlmedium Art, Form und/oder Größe der jeweils zu kühlenden Oberfläche anzupassen. So ist beispielsweise für einen Schokoladenüberzug, der eine große Dicke aufweist oder für einen mit Nussstücken oder ähnlichen Zutaten besetzten Überzug eine größere Menge an Kühlmedium zur Aushärtung erforderlich als für einen dünnen Schokoladenüberzug. Um die Zeitdauer der Beaufschlagung mit kryogenem Kühlmedium möglichst genau zu bestimmen ist der Steuereinheit beispielsweise ein Zeitgeber zugeordnet, der in Zusammenwirken mit einem Ventil in der Zuleitung für das kryogene Medium für die Zufuhr von kryogenem Kühlmedium über einen vorgegebenen oder programmgesteuerten Zeitraum hinweg sorgt. Alternativ sind der Steuereinheit optische Erfassungsmittel zugeordnet, die den Durchlauf des Eisprodukts detektieren und so einen von der Zeitdauer des Durchlaufs anhängige Dauer der Beaufschlagung mit kryogenem Kühlmedium ermöglichen.

Die Aufgabe der Erfindung wird auch mit einem Verfahren zum Herstellen von Speiseeisprodukten mit den Merkmalen des Anspruchs 6 gelöst.

Die Kühlung eines Speiseeisprodukts nach seiner Herstellung erfolgt nach dem erfindungsgemäßen Verfahren also dadurch, dass die Oberfläche des Eisprodukts, beispielweise die Oberfläche eines Überzugs auf dem Eisprodukt, mit einem kryogenen Kühlmedium aus einer Düsenanordnung, beispielsweise eine aus einer oder mehreren Sprühdüsen bestehenden Düsenanordnung, besprüht wird. Auf diese Weise erfolgt eine rasche Aushärtung der Oberfläche des Überzugs, und die Eisprodukte können ohne längere Wartezeiten einer Verpackungsmaschine zugeführt und verpackt werden. Das erfindungsgemäße Verfahren tragt daher zu einer Beschleunigung des Arbeitsablaufs bei.

Als bevorzugtes kryogenes Kühlmedium kommt in der erfindungsgemäßen Vorrichtung bzw. beim erfindungsgemäßen Verfahren ein tiefkalt verflüssigtes Gas, insbesondere flüssiger Stickstoff zum Einsatz, der auf die Oberfläche des Eisprodukts aufgesprüht wird und beim Kontakt dem Eisprodukt dessen Oberfläche Wärme entzieht und anschließend zumindest teilweise verdampft. Es ist im Rahmen der Erfindung jedoch auch vorstellbar, einen Strom aus kaltem Gas auf die zu kühlende Oberfläche zu richten, sofern die Kühlwirkung ausreicht, um ein rasches Aushärten der Oberfläche des Eisprodukts zu gewährleisten. Alternativ zu einem tiefkalt verflüssigten Gas oder einem kaltem Gas kann als kryogenes Kühlmedium auch druckverflüssigtes Kohlendioxid zum Einsatz kommen, das beim Austritt aus der Düse auf Umgebungsdruck entspannt und unter starker Abkühlung in ein Gemisch aus Trockeneisschnee und kaltem Kohlendioxidgas übergeht.

Die Dauer der Behandlung richtet sich dabei nach den jeweiligen Erfordernissen, insbesondere nach der Art und Dicke eines Überzugs. Erfindungsgemäß wird das Eisprodukt für eine Zeitdauer von 3s bis 10s mit flüssigem Stickstoff oder einem anderen kryogenen Kühlmedium beaufschlagt. Bezogen auf die gleiche Kühlaufgabe ist damit die Kühldauer bei der Erfindung deutlich geringer als bei Kühleinrichtungen mit Tauchbädern; der Grund hierfür mag darin liegen, dass beim Besprühen mit kryogenem Kühlmedium im Unterschied zum Tauchbad keine wärmeisolierende Gasschicht aus verdampftem Kühlmedium auf der Oberfläche des Eisprodukts gebildet wird (Leidenfrost-Effekt).

Eine vorteilhafte Weiterbildung der Erfindung sieht vor, dass die Menge des auf die Oberfläche des Eisprodukts aufgesprühten kryogenen Kühlmediums nach einem vorgegebenen Programm und/oder in Abhängigkeit von laufend gemessenen Parametern geregelt wird. Dadurch können in der gleichen Apparatur unterschiedliche Eisprodukte, beispielsweise Stieleis mit unterschiedlichen Überzügen und/oder unterschiedlichen Formen und/oder Größen, optimal gekühlt und anschließend ohne größere weitere Wartezeit verpackt werden.

Anhand der Zeichnungen soll nachfolgend ein Ausführungsbeispiel der Erfindung näher erläutert werden. In schematischen Ansichten zeigen:

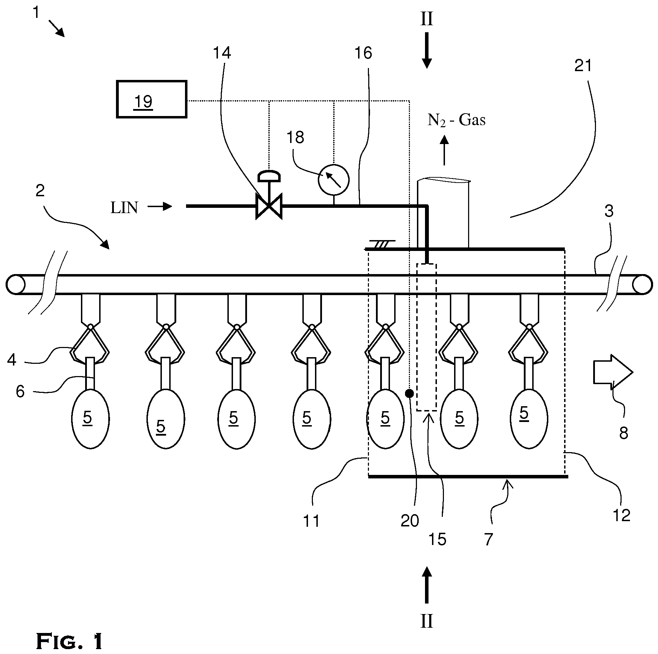

Fig. 1: Eine Einrichtung zur Kühlung von Eisprodukten im Längsschnitt und

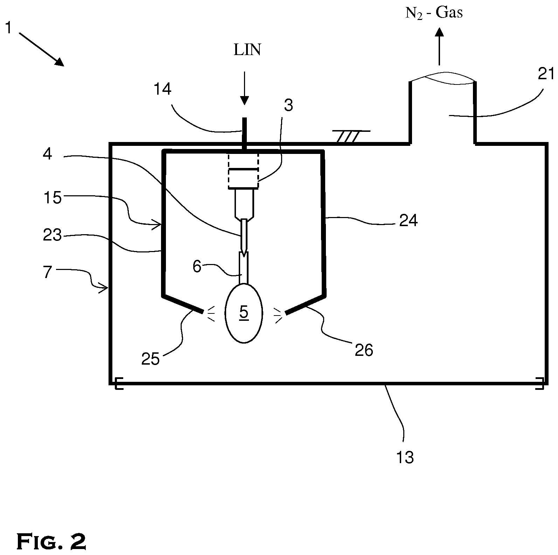

Fig. 2: Die Einrichtung aus Fig. 1 im Querschnitt entlang der Ebene II-II aus Fig. 1.

Die in der Zeichnung dargestellte Kühleinrichtung 1 ist Teil einer hier nicht weiter gezeigten Vorrichtung zur Herstellung von Speiseeisprodukten, im Ausführungsbeispiel zur Herstellung von Stieleis. Das Stieleis wird in an sich bekannter und hier nicht gezeigter Weise beispielsweise dadurch hergestellt, dass ein Kern aus Speiseeis extrudiert wird, anschließend ein Stiel aus Holz oder Kunststoff in den Kern eingebracht und das extrudierte Eis entsprechend zugeschnitten wird. Der Eiskern wird anschließend in einen Härtetunnel überführt und auf eine tiefe Temperatur von beispielsweise unter -20°C gebracht. Zur Herstellung eines Überzugs wird das Stieleis anschließend in ein mit einer flüssigen Überzugsmasse gefülltes Tauchbad eingetaucht. Aus dem Tauchbad kommend, wird das Eisprodukt der im Folgenden beschriebenen Kühleinrichtung 1 zugeführt.

Die Kühleinrichtung 1 umfasst eine Transporteinrichtung 2 mit einem Förderband 3, an dem Klemmeinrichtungen 4 zum lösbaren Befestigen von jeweils mit einem Überzug aus z.B. Schokolade versehenen Eisprodukten 5 angeordnet sind. Im Betrieb der Kühleinrichtung 1 sind die Klemmeinrichtungen 4 beispielsweise jeweils am Stiel eines Stieleises befestigt. Die an den Klemmeinrichtungen 4 befestigten Eisprodukte 5 durchlaufen einen Kühltunnel 7, der, in der durch den Pfeil 8 angedeuteten Laufrichtung der Eisprodukte 5 gesehen, vorderseitig und rückseitig jeweils Durchlauföffnungen 11, 12 für die Eisprodukte 5 aufweist, ansonsten aber mit thermisch isolierten Wänden ausgerüstet ist. Aus Wartungsgründen ist dabei der Boden 13 des Kühltunnels 7 als abnehmbare Platte ausgestaltet.

Innerhalb des Kühltunnels 7 ist eine Düsenanordnung 15 vorgesehen, die über eine Zuleitung 14 mit einer hier nicht gezeigten Quelle für ein kryogenes Kühlmedium verbunden ist. Die Zuleitung 14 ist mit einem motorgetriebenen, elektronisch ansteuerbaren Ventil 17 und einem Manometer 18 ausgerüstet, die beide mit einer elektronischen Steuereinheit 19 in Datenverbindung stehen. Eine weitere Datenverbindung besteht zwischen der Steuereinheit 19 und einem optischen Sensor 20, beispielsweise einer Lichtschranke, der im Innern des Kühltunnels 7 angeordnet ist. Die Düsenanordnung 15 umfasst zwei Äste 23, 24, die zu beiden Seiten des Laufweges der Eisprodukte 5 durch den Kühltunnel 7 angeordnet sind. Jeder der Äste 23, 24 umfasst eine Zuleitung, die mit der Zuleitung 14 in Strömungsverbindung steht und an ihrer strömungstechnisch von der Zuleitung 14 entgegengesetzten Ende jeweils mit einer Sprühdüse 25, 26 ausgerüstet ist.

Beim Betrieb der Kühleinrichtung 1 werden die Eisprodukte in an sich bekannter Weise gefertigt und anschließend mittels der Fördereinrichtung 3 in Richtung des Pfeils 8 durch den Kühltunnel 7 gefördert. Im Kühltunnel 7 werden die Eisprodukte 5 aus den Sprühdüsen 25, 26 von beiden Seiten mit einem kryogenen Kühlmedium, beispielsweise mit flüssigem Stickstoff, beaufschlagt. Dazu wird beim Herannahen eines Eisprodukts 5 das Ventil 17 geöffnet, und flüssiges Kühlmedium strömt über die Zuleitung 14 und die beiden Äste 23, 24 der Düsenanordnung 15 zu den jeweiligen Sprühdüsen 25, 26. Das Herannahen eines Eisproduktes 5 an die Düsenanordnung 17 wird über den optischen Sensor 20 detektiert, woraufhin die Steuereinrichtung 19 die Zuleitung 14 für die Dauer des Durchlaufs eines Eisprodukts 5 freigibt. Eine Abgasleitung 27 dient zum Abführen von gasförmigen Kühlmedium aus dem Kühltunnel 7. Innerhalb der Abgasleitung 27 kann - hier nicht gezeigt - eine Absaugeinrichtung angeordnet sein, die sicherstellt, dass kein oder nur eine geringe, für das Bedienpersonal ungefährliche Menge an verdampftem Kühlmedium aus dem Kühltunnel 7 austritt.

Durch die Beaufschlagung mit kryogenen Kältemittel wird eine rasche Aushärtung der Eisprodukte 5 erzielt, wodurch es nicht oder nur mehr in geringem Umfang zum Abtropfen von Überzugsmasse von den Eisprodukten 5 kommt. Mittels der Steuereinheit 19 kann im Übrigen der Mengenzulauf an Kältemedium gesteuert und beispielsweise in Abhängigkeit von einer im Kühltunnel 7 gemessenen Temperatur oder dem Druck in der Zuleitung 14 geregelt werden. Eine weitere Regelungsmöglichkeit besteht darin, dass über die Transportgeschwindigkeit des Förderbandes 3 die Aufenthaltsdauer der Eisprodukte im Kühltunnel 7 variiert und den jeweiligen Anforderungen angepasst wird. Auf diese Weise kann die Kälteleistung und die Menge des eingesetzten Kühlmediums sehr genau den jeweiligen Anforderungen angepasst werden.

### Bezugszeichenliste

- 1.: Kühleinrichtung
- 2.: Transporteinrichtung
- 3.: Förderband
- 4.: Klemmeinrichtung
- 5.: Eisprodukt
- 6.: Stiel
- 7.: Kühltunnel
- 8.: Pfeil
- 9.: -
- 10.: -
- 11.: Durchlauföffnung
- 12.: Durchlauföffnung
- 13.: Boden
- 14.: Zuleitung
- 15.: Düsenanordnung
- 16.: -
- 17.: Ventil
- 18.: Manometer
- 19.: Steuereinheit
- 20.: Sensor
- 21.: -
- 22.: -
- 23.: Ast
- 24.: Ast
- 25.: Sprühdüse
- 26.: Sprühdüse
- 27.: Absaugleitung

## Patentansprüche

1. Vorrichtung zum Herstellen von Speiseeisprodukten, mit einem mit einer flüssigen Überzugmasse füllbarem Tauchbad, einer Einrichtung zum Einbringen eines gefrorenen Kerns aus Speiseeis in das Tauchbad zur Herstellung eines aus dem mit einem Überzug aus Überzugsmasse versehenen Kern bestehenden Eisprodukts (5), und einer Kühleinrichtung (1) zum Kühlen und Aushärten der Oberfläche des Überzugs des Eisprodukts (5),
**dadurch gekennzeichnet, dass** die Kühleinrichtung (1) eine Transporteinrichtung (2) zum Transportieren des Eisprodukts (5) sowie eine an eine Zuleitung (14) für ein kryogenes Medium angeschlossene Düsenanordnung (15) zum Beaufschlagen der Oberfläche des Eisprodukts (5) mit einem kryogenen Kältemittel umfasst, wobei die Düsenanordnung (15) wenigstens zwei Düsenaustritte (25, 26) umfasst, die auf einander gegenüberliegenden Seiten eines beim bestimmungsgemäßen Einsatz der Vorrichtung vom Eisprodukt (5) in der Kühlleinrichtung (1) durchlaufenen Transportweges angeordnet sind..

2. Vorrichtung nach Anspruch 2, **dadurch gekennzeichnet, dass** die Düsenanordnung (15) in einem von der Transporteinrichtung (2) durchlaufenen, vorzugsweise mit thermisch isolierten Wänden ausgerüsteten Kühltunnel (7) angeordnet ist.

3. Vorrichtung nach einem der vorhergehenden Ansprüche, **dadurch gekennzeichnet, dass** die Kühleinrichtung (1) eine mit einer Absaugeinrichtung ausgerüstete Gasentnahmeleitung (27) aufweist.

4. Vorrichtung nach einem der vorhergehenden Ansprüche, **dadurch gekennzeichnet, dass** die Düsenanordnung (15) mit einer Steuereinrichtung (19) in Wirkverbindung steht, mittels der die Menge an auf das Eisprodukt (5) jeweils ausgetragene Kühlmedium nach vorgegebenen oder laufend gemessenen Parametern einstellbar und/oder regelbar ist.

5. Verfahren zum Herstellen von Speiseeisprodukten, bei dem die Oberfläche eines gefrorenen Kerns aus Speiseeis in ein Tauchbad aus flüssiger Überzugsmasse eingetaucht wird, anschließend das mit dem Überzug versehene Eisprodukt (5) aus dem Tauchbad entnommen und zwecks Aushärtung der Oberfläche des Eisprodukts einer Kühleinrichtung (1) zugeführt wird,
**dadurch gekennzeichnet,**
**dass** in der Kühleinrichtung (1) die Oberfläche des Eisprodukts (5) mit einem kryogenen Kühlmedium aus einer Düsenanordnung (15) besprüht wird, wobei die Oberfläche des Eisprodukts (5) für eine Zeitdauer von 3s bis 10s mit dem kryogenen Kühlmedium beaufschlagt wird.

6. Verfahren nach Anspruch 5, **dadurch gekennzeichnet, dass** als kryogenes Kühlmedium flüssiger Stickstoff zum Einsatz kommt.

7. Verfahren nach einem der Ansprüche 5 oder 6, **dadurch gekennzeichnet, dass** die Menge des auf die Oberfläche des Eisprodukts (5) aufgesprühten kryogenen Kühlmediums nach einem vorgegebenen Programm und/oder nach laufend gemessenen Parametern geregelt wird.

## Claims

1. Apparatus for producing ice cream products, having an immersion bath which can be filled with a liquid coating material, a device for introducing a frozen core of ice cream into the immersion bath for producing an ice product (5) consisting of the core provided with a coating of coating material, and a chilling device (1) for chilling and hardening the surface of the coating of the ice product (5), **characterized in that** the chilling device (1) comprises a transport device (2) for transporting the ice product (5) and a nozzle arrangement (15) which is connected to a supply line (14) for a cryogenic medium and intended for applying a cryogenic freezing agent to the surface of the ice product (5), wherein the nozzle arrangement (15) comprises at least two nozzle outlets (25, 26) which are arranged on mutually opposite sides of a transport path through which the ice product (5) runs in the chilling device (1) when the apparatus is used as intended.

2. Apparatus according to Claim 2, **characterized in that** the nozzle arrangement (15) is arranged in a Chilling tunnel (7) through which the transport device (2) runs and which is preferably equipped with thermally insulated walls.

3. Apparatus according to one of the preceding claims, **characterized in that** the chilling device (1) has a gas removal line (27) equipped with a suction device.

4. Apparatus according to one of the preceding claims, **characterized in that** the nozzle arrangement (15) is operatively connected to a control device (19) by means of which the amount of chilling medium dispensed in each case onto the ice product (5) can be set and/or regulated in accordance with predetermined or continuously measured parameters.

5. Method for producing ice cream products, in which the surface of a frozen core of ice cream is dipped into an immersion bath of liquid coating material, and then the ice product (5) provided with the coating is removed from the immersion bath and fed to a chilling device (1) for the purpose of hardening the surface of the ice product, **characterized in that** the surface: of the ice product (5) is sprayed with a cryogenic chilling medium from a nozzle arrangement (15) in the chilling device (1), wherein the cryogenic chilling medium is applied to the surface of the ice product (5) for a time period of 3 s to 10 s.

6. Method according to Claim 5, **characterized in that** liquid nitrogen is used as the cryogenic chilling medium.

7. Method according to either of Claims 5 and 6, **characterized in that** the amount of cryogenic chilling medium sprayed onto the surface of the ice product (5) is regulated in accordance with a predetermined program and/or in accordance with continuously measured parameters.

## Revendications

1. Dispositif pour la fabrication de produits de crème glacée, avec un bain d'immersion pouvant être rempli avec une masse d'enrobage liquide, un dispositif pour introduire un noyau congelé en crème glacée dans le bain d'immersion pour la fabrication d'un produit glacé (5) composé du noyau muni d'un enrobage en masse d'enrobage, et un dispositif de refroidissement (1) pour refroidir et durcir la surface de l'enrobage du produit glacé (5), **caractérisé en ce que** le dispositif de refroidissement (1) comprend un dispositif de transport (2) pour transporter le produit glacé (5) ainsi qu'un agencement de buse (15) raccordé à une conduite d'arrivée (14) pour un fluide cryogénique afin d'exposer la surface du produit glacé (5) à un agent réfrigérant cryogénique, dans lequel l'agencement de buse (15) comprend au moins deux sorties de buse (25, 26), qui sont disposées sur des côtés opposés l'un à l'autre d'une trajectoire de transport parcourue par le produit glacé (5) dans le dispositif de refroidissement (1) lorsque le dispositif est utilisé de la façon prévue.

2. Dispositif selon la revendication 2, **caractérisé en ce que** l'agencement de buse (15) est disposé dans un tunnel de refroidissement (7) parcouru par le dispositif de transport (2), de préférence équipé de parois isolées thermiquement.

3. Dispositif selon l'une quelconque des revendications précédentes, **caractérisé en ce que** le dispositif de refroidissement (1) présente une conduite de prélèvement de gaz (27) équipée d'un dispositif d'aspiration.

4. Dispositif selon l'une quelconque des revendications précédentes, **caractérisé en ce que** l'agencement de buse (15) est en liaison active avec un dispositif de commande (19), au moyen duquel le débit du fluide de refroidissement envoyé respectivement sur le produit glacé (5) peut être réglé et/ou régulé selon des paramètres prédéterminés ou mesurés en continu.

5. Procédé de fabrication de produits de crème glacée, dans lequel on plonge la surface d'un noyau congelé en crème glacée dans un bain d'immersion constitué d'une masse d'enrobage liquide, on retire ensuite le produit glacé (5) muni de l'enrobage hors du bain d'immersion et on l'envoie à un dispositif de refroidissement (1) pour durcir la surface du produit glacé, **caractérisé en ce que** dans le dispositif de refroidissement (1) on projette un fluide de refroidissement cryogénique sur la surface du produit glacé (5) à partir d'un agencement de buse (15), dans lequel on expose la surface du produit glacé (5) au fluide de refroidissement cryogénique pendant une durée de 3 s à 10 s.

6. Procédé selon la revendication 5, **caractérisé en ce que** l'on utilise de l'azote liquide comme fluide de refroidissement cryogénique.

7. Procédé selon une des revendications 5 ou 6, **caractérisé en ce que** l'on régule le débit du fluide de refroidissement cryogénique projeté sur la surface du produit glacé (5) selon un programme prédéterminé ou selon des paramètres mesurés en continu.
